# EUROPÄISCHE PATENTSCHRIFT

(11) **EP 1 534 552 B1**
(45) Veröffentlichungstag und Bekanntmachung des Hinweises auf die Patenterteilung: **03.01.2007**
(21) Anmeldenummer: 03793776.0
(22) Anmeldetag: 30.08.2003
(51) Int. Cl.: F16D 43/10, B60W 10/04, B60W 10/10

(54) **FAHRZEUGKUPPLUNG**
VEHICLE CLUTCH
EMBRAYAGE DE VEHICULE

(30) Priorität: 07.09.2002 DE 10241508
(43) Veröffentlichungstag der Anmeldung: 01.06.2005
(73) Patentinhaber: ZF FRIEDRICHSHAFEN Aktiengesellschaft, 88038 Friedrichshafen (DE)
(72) Erfinder: DÖBELE, Bernd, 88682 Salem (DE); HÄRDTLE, Wilhelm, 88677 Markdorf (DE); HEINZELMANN, Karl-Fritz, 88074 Mackenbeuren (DE); RÜCHARDT, Christoph, 88131 Bodolz (DE)
(86) Internationale Anmeldenummer: PCT/EP2003/009650
(87) Internationale Veröffentlichungsnummer: WO 2004/022374

(56) Entgegenhaltungen:
- WO-A-02/48530
- DE-A- 3 730 565
- US-A- 4 732 251
- US-A- 5 441 137

## Beschreibung

Die Erfindung betrifft eine Fahrzeugkupplung nach dem Oberbegriff von Anspruch 1, wie sie aus US-4732 251 bekannt ist.

In einem Fahrzeug wird üblicherweise zwischen einer Antriebsmaschine und einem Fahrzeuggetriebe eine Fahrzeugkupplung eingebaut, die zwei Funktionen zu übernehmen hat. Einerseits dient die Fahrzeugkupplung zum Anfahren des Fahrzeugs, indem eine zunächst geöffnete Fahrzeugkupplung über einen schleifenden Zwischenzustand bei Bewegungsaufnahme des Fahrzeugs zunehmend schließt, wodurch mehr und mehr Drehmoment übertragen wird, bis schließlich die Fahrzeugkupplung vollständig geschlossen ist und das komplette Drehmoment von der Antriebsmaschine auf das Getriebe übertragen wird.
Andererseits dient die Fahrzeugkupplung während der Fahrt, zum Zwecke des Wechselns der Zahnradübersetzung im Getriebe, dem Lösen der kraftschlüssigen Verbindung zwischen Antriebsmaschine und Fahrzeuggetriebe, um später nach dem Wechsel, entsprechend dem Fahrzustand, entweder schnell oder allmählich wieder geschlossen zu werden.

Eine derartige Fahrzeugkupplung ist beispielsweise aus der DE 37 30 565 A1 bekannt geworden.

Zwischen einer Antriebsmaschine und einem Fahrzeuggetriebe ist eine Fahrzeugkupplung angeordnet, die als eine Fliehkraftkupplung beim Anfahrvorgang arbeitet. Während eines Gangwechsels muss die Kupplung von einem Aktuator über ein entsprechendes Gestänge fremdbetätigt werden. Das erfordert einen separaten Aktuator mit zugehöriger Übertragungseinrichtung zur Kupplung und eine damit verbundene Betätigungseinrichtung an der Kupplung.

Der Erfindung liegt die Aufgabe zugrunde, eine Fahrzeugkupplung zwischen Antriebsmaschine und Fahrzeuggetriebe zu vereinfachen.

Die Aufgabe wird gelöst durch eine Fahrzeugkupplung mit den Merkmalen des Anspruchs 1. Ausgestaltungen sind Gegenstand von Unteransprüchen.

Eine Fahrzeugkupplung ist in einem Fahrzeug zwischen einer Antriebsmaschine und einem Getriebe angeordnet. Sie wird gesteuert in Abhängigkeit von der Drehzahl der Antriebsmaschine und gegebenenfalls eines Drehzahlsignals des Getriebes, beispielsweise der Eingangswellendrehzahl oder der Abtriebswellendrehzahl des Getriebes. In Abhängigkeit von der Drehzahl der Antriebsmaschine verursachen Elemente in Form einer Fliehkraftkupplung eine variable Drehmomentübertragung. Mit Hilfe der Drehzahlsignale wird beim Anfahren eine dem Fahrpedalwinkel entsprechende Beschleunigung des Fahrzeugs dadurch eingestellt, dass die Fliehkraftwirkung der Elemente das erforderliche Reibmoment erzeugen. Bei kleinen Drehzahlen, im Motorleerlauf bzw. bei einer Getriebeeingangswellendrehzahl bzw. Getriebeabtriebswellendrehzahl nahe dem Stillstand öffnet die Fahrzeugkupplung selbsttätig aufgrund der geringen anliegenden Fliehkräfte, die prinzipbedingt abhängig sind von der Drehzahl. Eine Betätigung der Fahrzeugkupplung erfolgt nur über die Fliehkräfte. Ein Aktuator, der fremdbetätigt die Fahrzeugkupplung verstellt, ist nicht vorgesehen. Die Fahrzeugkupplung ist die einzige zwischen der Antriebsmaschine und dem Getriebe angeordnete Kupplung und wirkt lediglich als eine Anfahrkupplung ohne Zugkraftunterbrechungsmöglichkeit bei Schaltvorgängen. Eine Schaltkupplung zur Unterbrechung der Zugkraft und der Drehmomentübertragung bei einem Schaltvorgang während der Fahrt ist nicht vorgesehen. Vorzugsweise sind Vorrichtungen vorgesehen zur Überwachung der Drehzahl eines Bauteils auf der Eingangsseite der Fahrzeugkupplung und eines Bauteils auf der Ausgangsseite der Fahrzeugkupplung, so dass Drehzahldifferenzen in der Kupplung aufgezeigt werden können. Ein zu starkes Beschleunigen der Kupplung durch die Antriebsmaschine soll ebenso wie ein zu starkes Drücken der Motordrehzahl durch Rückwirkungen von der Abtriebsseite der Kupplung bzw. des Getriebes vermieden werden, indem die Drehzahlen überwacht werden und notfalls der Missstand durch eine aktive Beeinflussung der Antriebsmaschine durch ein Zurücknehmen der Einspritzmenge bzw. ein gegebenenfalls zeitlich begrenztes Erhöhen der Einspritzmenge behoben wird oder durch eine Änderung der Gangstufe. In einer vorteilhaften Ausgestaltung (nicht Gegenstand der Erfindung) ist eine elektronische Steuereinrichtung vorgesehen, in der eine Berechnung der Reibleistung der Fahrzeugkupplung erfolgen kann und die mit den Vorrichtungen zur Überwachung der Drehzahlen verbunden ist. Die Berechnung der Reibleistung erfolgt beispielsweise durch Multiplikation der Drehzahldifferenz zwischen Kupplungseingangsseite und Kupplungsausgangsseite mit dem von der Kupplung übertragenen Moment. Unter Berücksichtigung einer Zeitkomponente kann daraus die Reibarbeit ermittelt werden. Das übertragene Moment ist abhängig von der Drehzahl der Antriebsmaschine und kann durch einen geeigneten Algorithmus, der nicht Gegenstand dieser Erfindung ist, ermittelt werden, in den die Drehzahl der Antriebsmaschine, die Getriebeeingangsdrehzahl, die Getriebeabtriebsdrehzahl, die Fahrzeuggeschwindigkeit, das aktuelle Motormoment und daraus abgeleitete Größen als Eingangsgrößen eingehen. In einer weiteren vorteilhaften Ausgestaltung ist in der elektronischen Steuereinrichtung ein Kennfeld oder eine vergleichbare Logik gespeichert, über das die Drehzahl der Antriebsmaschine beeinflussbar ist und das die Abhängigkeiten von Werten für Fahrpedalstellung, Einspritzmenge und Motordrehzahl umfasst. Gegebenenfalls sind weitere Größen wie Fahrzeuggewicht und Belastungszustand der Kupplung zu berücksichtigen.
Durch die sehr großen Gewichtsunterschiede zwischen einem leeren und einem beladenen Fahrzeug, besonders bei Nutzfahrzeugen, wird es schwierig sein, eine für alle Fahrzustände geeignete Abstimmung zu finden. Bei einem schweren Fahrzeug kann der Fall eintreten, dass die Kupplung erst bei sehr hohen Drehzahlen genügend Moment überträgt, um das Fahrzeug ausreichend zu beschleunigen und somit große Differenzdrehzahlen an der Kupplung auftreten, wodurch eine große Reibleistung und in Folge ein hoher Verschleiß zu erwarten ist. Eine Motorbeeinflussung in Form einer Rücknahme der Einspritzmenge kann fallweise die Differenzdrehzahlen reduzieren, jedoch nimmt dann die Rutschzeit zu, was zu einem schlechten Beschleunigungsverhalten, wegen geringem übertragbarem Moment, und zu einer großen Reibarbeit führt. Daher weist die Kupplung mit ihren die Drehmomentübertragung verursachenden Elemente eine Kinematik auf, die in Abhängigkeit von Fahrzeuggewicht bzw. Fahrwiderstand beeinflussbar ist. Vorzugsweise umfasst die Kinematik wenigstens ein veränderbares Hebelelement, deren veränderbare Hebelverhältnisse zur Beeinflussung der Drehmomentsübertragungsfähigkeit der Fahrzeugkupplung dienen. Die Hebelverhältnisse an den Hebelelementen sind vorteilhafterweise durch Verschieben von Umlenkpunkten an den Hebeln elektromotorisch, elektromagnetisch, hydraulisch oder pneumatisch veränderbar. In einer besonders vorteilhaften Ausbildung weist die Fahrzeugkupplung einen Ausgleich von Verschleiß an der Drehmomentübertragungsfähigkeit auf, wozu insbesondere die veränderbaren Hebelelemente vorgesehen sein können. Die elektronische Steuereinrichtung der Fahrzeugkupplung ist vorteilhafterweise in eine Steuereinrichtung des Getriebes oder des gesamten Fahrzeugs integriert. Insbesondere findet eine derartige Fahrzeugkupplung Verwendung zwischen einer Antriebsmaschine und einem automatisierten Fahrzeuggetriebe.

Eine Neutralstellung des Getriebes beim Abstellen des Fahrzeugs ist nicht mehr erforderlich, da die Fahrzeugkupplung automatisch und sicher öffnet. Eine zusätzliche Verkabelung, Leistungsversorgung und Fahrzeuginstallation für einen Kupplungsaktuator im Fahrzeug kann entfallen. Die Bauart des der Fahrzeugkupplung nachgeordneten Getriebes ist beliebig, so können Getriebe mit einer oder mehreren Vorgelegewellen ebenso zur Anwendung kommen, wie Getriebe mit einem oder mehreren vor- oder nachgeschalteten Hilfsgetrieben, wie Splitgruppengetrieben und Bereichsgruppengetrieben.
Die Verwendung von Nebenabtrieben am Getriebe bleibt mit der vorgeschlagenen Fahrzeugkupplung voll funktionsfähig. Im Fahrzeugstillstand wird das Getriebe in Neutral geschaltet. Dann können die Nebenabtriebe zugeschaltet werden. Wird nun die Antriebsmaschine beschleunigt, so schließt die Kupplung und überträgt Drehmoment auf das Getriebe und damit auf die Nebenabtriebe. Entsprechendes gilt für instationäre Nebenabtriebe, die mit eingelegtem Gang betrieben werden.

Die Erfindung wird anhand einer Zeichnung näher erläutert.

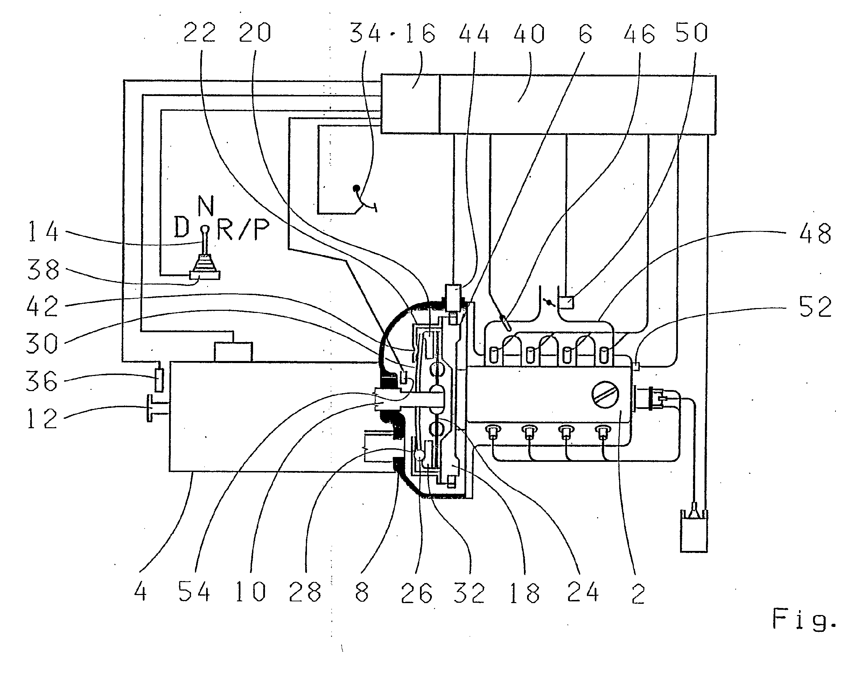

In der Zeichnung ist anhand eines schematischen Längsschnittes durch ein Stufenschaltgetriebe ein Ausführungsbeispiel der Erfindung dargestellt. Dabei ist in der Zeichnung mit 2 ein Fahrzeugmotor und mit 4 ein als Stufenschaltgetriebe ausgebildetes Getriebe insgesamt bezeichnet, während 6 eine zwischen dem Fahrzeugmotor 2 und dem Getriebe 4 angeordnete Kupplung angibt. Mit dem Bezugszeichen 8 ist ein das Getriebe 4 einschließendes Gehäuse dargestellt. Eine Getriebeeingangswelle ist mit 10 und eine Getriebeausgangswelle mit 12 angegeben.
Ein Getriebewählhebel 14 ist mit einer Getriebesteuereinrichtung 16 verbunden. Diesem Getriebewählhebel 14 sind bei der hier gezeigten Ausführung nur drei Stellungen, nämlich eine mittlere Neutralstellung N, eine normale Vorwärtsfahrstellung D, in der alle Vorwärtsgetriebegänge automatisch geschaltet werden, und eine Rückwärtsfahrstellung R/P zugeordnet, die bei stehendem Fahrzeug zugleich eine Parksperre bietet.
Die in der Zeichnung insgesamt mit 6 bezeichnete Kupplung ist als Reibscheibenkupplung ausgebildet, die eine mit der hier nicht gezeigten Kurbelwelle des Fahrzeugmotors 2 starr verbundene Kupplungsplatte 18 sowie eine Kupplungsdruckplatte 20 aufweist, die gegenüber der Kupplungsplatte 18 bzw. einem an dieser befestigten Kupplungsdeckel 22 unverdrehbar, aber axial verschiebbar gehalten ist, Zwischen der Kupplungsplatte 18 und der Kupplungsdruckplatte 20 sind die Reibscheiben einer starr auf der Getriebeeingangswelle 10 gehaltenen Kupplungsscheibe 24 angeordnet. Eine an sich bekannte Tellerfeder 30, die in einem mittleren Durchmesserbereich an einem Lagernocken 42 des Kupplungsdeckels 22 schwenkbar gelagert ist, drückt mit ihrem radial äußeren Rand gegen die Kupplungsdruckplatte 20.
Die zum Einrücken der Kupplung 6 erforderliche Anpresskraft wird durch Fliehkraft erzeugt. Dazu sind mehrere, über den Umfang gleichmäßig verteilte Fliehgewichte in Form von auf zylindrischen Bolzen drehbar gelagerten Zylinderrollen 26 vorgesehen, die in radialen Schlitzen 28 des Kupplungsdeckels 22 radial verstellbar geführt sind und durch entsprechende Ausnehmungen in die Tellerfeder 30 greifen. Dabei wälzen sich die Zylinderrollen 26, deren Lagerbolzen sich an den Rändern der Schlitze 28 auf dem Kupplungsdeckel 22 abstützen, auf schräg zur radialen Richtung verlaufenden Auflauframpen 32 der Kupplungsdruckplatte 20 ab. Bei ansteigender Drehzahl der Kurbelwelle und dabei infolge der Fliehkraft zunehmendem radialen Auswandern der Zylinderrollen 26 steigt die über die Auflauframpe 32 auf die Kupplungsdruckplatten 20 ausgeübte axiale Anpresskraft an, so dass die Kupplung 6 zunehmend in Einrückrichtung betätigt wird.
Wenn das mit einem derartigen Stufenschaltgetriebe 4 ausgerüstete Fahrzeug nun aus dem Stillstand angefahren werden soll, so wird die Drehzahl des Antriebsmotors 2 durch Betätigen eines mit 34 angedeuteten Fahrpedals angehoben und es ergibt sich ein selbsttätiger, drehzahlabhängiger Eingriff der Kupplung 6 durch die Wirkung der der Fliehkraft unterworfenen Zylinderrollen 26, die mit steigender Motordrehzahl immer mehr nach außen gedrängt werden und dabei entsprechend der Schrägstellung der Auflauframpe 32 die Kupplungsdruckplatte 20 gegen die Kupplungsplatte 18 drücken, wodurch die zwischen beiden Platten angeordneten Reibscheiben der Kupplungsscheibe 24 zur Herstellung eines Reibschlusses zwischen der Kurbelwelle und der Getriebeantriebswelle 10 veranlasst werden. Da zuvor der Getriebewählhebel 14 in die Stellung D oder R/P, also in die Vorwärts- oder Rückwärtsfahrstellung gebracht wurde, ist auch der erste Vorwärts- oder der Rückwärtsgang des Stufengetriebes 4 eingeschaltet, und das Fahrzeug kann entsprechend des sich aufbauenden Reibschlusses an der Kupplung 6 anfahren.
Bei kleiner werdenden Geschwindigkeiten des Fahrzeugs öffnet die durch Fliehkraft betätigte Kupplung wieder, beispielsweise wenn das Fahrzeug verkehrsbedingt halten oder sonst zum Stillstand kommen soll. Während der übrigen Schaltvorgänge des Getriebes erfolgt dagegen keine Kupplungsbetätigung mehr, da diese Schaltvorgänge selbsttätig jeweils im Synchronpunkt der zugeordneten Getriebezahnräder durchgeführt werden. Die einzelnen Schaltvorgänge werden dabei von der Getriebesteuereinrichtung 16 ausgelöst, die dazu ein der Fahrgeschwindigkeit des Fahrzeugs entsprechendes Signal von einem die Drehzahl der Getriebeabtriebswelle 12 erfassenden Drehzahlsensor 36 erhält. Außerdem kann ein dem Getriebewählhebel 14 zugeordneter Stellungsgeber 38 vorgesehen sein, der der Getriebesteuereinrichtung 16 ein Signal über den mit dem Getriebewählhebel 14 eingestellten Fahrbereich mitteilt. Eine weitere Signalleitung verbindet die Getriebesteuereinrichtung 16 mit dem Fahrpedal 34 des Fahrzeugs. Weitere, für die Steuerung des Getriebes erforderliche Signale kann die Getriebesteuereinrichtung 16 auch von einer mit dieser zu einem einheitlichen Steuergerät verbundenen Motorsteuereinrichtung 40 erhalten, die beispielsweise die Zündung und Kraftstoffzufuhr zu dem Fahrzeugmotor 2 steuert. Diese Motorsteuereinrichtung 40 bzw. die Getriebesteuereinrichtung 16 erhalten u.a. Messsignale von einem Drehzahlsensor 44 über die Drehzahl der Kurbelwelle, sowie von einem Drucksensor 46 über den leistungsabhängigen Unterdruck in der Saugleitung 48. Weitere Messgeber können ein die Stellung der Drosselklappe erfassender Stellungsgeber 50 sowie ein die Motortemperatur erfassender Temperaturgeber 52 sein. Die Drehzahl der Eingangswelle 10 des Getriebes 4 wird von einem Drehzahlsensor 54 erfasst und an die Getriebesteuereinrichtung 16 übermittelt.

### Bezugszeichen

- 2: Fahrzeugmotor
- 4: Getriebe
- 6: Kupplung
- 8: Gehäuse
- 10: Getriebeeingangswelle
- 12: Getriebeausgangswelle
- 14: Getriebewählhebel
- 16: Getriebesteuereinrichtung
- 18: Kupplungsplatte
- 20: Kupplungsdruckplatte
- 22: Kupplungsdeckel
- 24: Kupplungsscheibe
- 26: Zylinderrollen
- 28: Schlitz
- 30: Tellerfeder
- 32: Auflauframpe
- 34: Fahrpedal
- 36: Drehzahlsensor
- 38: Stellungsgeber
- 40: Motorsteuereinrichtung
- 42: Lagernocken
- 44: Drehzahlsensor
- 46: Drucksensor
- 48: Saugleitung
- 50: Stellungsgeber
- 52: Temperaturgeber
- 54: Drehzahlsensor

## Patentansprüche

1. Fahrzeugkupplung (6), angeordnet in einem Fahrzeug zwischen einer Antriebsmaschine (2) und einem Getriebe (4) und gesteuert in Abhängigkeit von der Drehzahl der Antriebsmaschine (2), mit in Abhängigkeit von der Drehzahl der Antriebsmaschine (2) eine variable Drehmomentübertragung verursachenden Elementen (26, 32), wobei die Fahrzeugkupplung (6) ohne einen fremdbetätigten Aktuator betätigbar ist, und die die Drehmomentübertragung verursachenden Elemente (26, 32) eine Kinematik aufweisen, die in Abhängigkeit von Fahrzeuggewicht bzw. Fahrwiderstand beeinflussbar ist, **dadurch gekennzeichnet, dass** die Kinematik veränderbare Hebelelemente umfasst, deren veränderbare Hebelverhältnisse zur Beeinflussung der Drehmomentsübertragungsfähigkeit der Fahrzeugkupplung (6) dienen, und die Hebelverhältnisse an den Hebelelementen durch Verschieben von Umlenkpunkten an den Hebeln elektromotorisch, elektromagnetisch, hydraulisch oder pneumatisch veränderbar sind.

2. Fahrzeugkupplung (6) nach Anspruch 1, **dadurch gekennzeichnet, dass** die Fahrzeugkupplung einen Verschleißausgleich aufweist.

3. Fahrzeugkupplung (6) nach Anspruch 2, **dadurch gekennzeichnet, dass** die veränderbaren Hebelelemente zum Ausgleich des Verschleißes vorgesehen sind.

4. Verwendung der Fahrzeugkupplung (6) nach den Ansprüchen 1 bis 3 zwischen einer Antriebsmaschine (2) und einem automatisierten Fahrzeuggetriebe (4).

## Claims

1. Disclosed is a vehicle clutch (6) which is arranged in a vehicle between a driving engine (2) and a transmission (4) and whose control depends on the speed of the driving engine (2), with elements (26, 32) included which, depending on the speed of the driving engine (2), cause a variable torque transmission, with the vehicle clutch (6) being controllable without an externally operated actuator and the elements (26, 32) causing torque transmission being marked by a kinematic pattern which can be influenced by the vehicle weight and/or the road resistance, **characterized in that** the kinematic system comprises variable lever elements whose variable lever ratios serve to influence the torque-transmitting capability of the vehicle clutch (6), and that the lever ratios on the lever elements can be changed by electromotive, electromagnetic, hydraulic or pneumatic means through displacement of deflection points on the levers.

2. A vehicle clutch (6) according to claim 1, **characterized in that** the vehicle clutch features wear-compensating elements.

3. A vehicle clutch (6) according to claim 2, **characterized in that** the variable lever elements are provided for wear compensation.

4. Use of the vehicle clutch (6) according to the claims 1 through 3 between a driving engine (2) and an automated vehicle transmission (4).

## Revendications

1. Embrayage d'un véhicule (6), disposé dans un véhicule entre un moteur d'entraînement (2) et une boîte de vitesses (4) et commandé en fonction du régime du moteur d'entraînement (2), et doté d'éléments (26, 32) provoquant en fonction du régime du moteur d'entraînement (2) une transmission de couple variable, sachant que l'embrayage du véhicule (6) peut être actionné sans actionneur à commande externe, et en ce que les éléments provoquant la transmission du couple (26, 32) comportent une cinématique qui peut être influencée en fonction du poids du véhicule ou de la résistance à l'avancement, **caractérisé en ce que** la cinématique comprend des éléments à leviers modifiables, dont les rapports de transmission par leviers variables servent à influencer la capacité de transmission de couple de l'embrayage du véhicule (6), et **en ce que** les rapports de transmission par leviers au niveau des éléments à levier peuvent être variés par voie d'un moteur électrique, par voie électromagnétique, hydraulique ou pneumatique en déplaçant les points de déviation au niveau des leviers.

2. Embrayage d'un véhicule (6) selon la revendication 1, **caractérisé en ce que** l'embrayage du véhicule comporte une compensation d'usure.

3. Embrayage d'un véhicule (6) selon la revendication 2, **caractérisé en ce que** les éléments à levier modifiables sont prévus pour la compensation de l'usure.

4. Utilisation de l'embrayage du véhicule (6) selon les revendications 1 à 3 entre le moteur d'entraînement (2) et une boîte de vitesses automatisée d'un véhicule (4).
